# DEMANDE DE BREVET EUROPEEN

(11) **EP 1 337 090 A1**
(43) Date de publication de la demande: **20.08.2003**
(21) Numéro de dépôt: 03290206.6
(22) Date de dépôt: 28.01.2003
(51) Int. Cl.: H04L 29/06

(54) **Procédé de sélection d'un format de codage dans un terminal**

(30) Priorité: 18.02.2002 FR 0202016
(71) Demandeur: ALCATEL, 75008 Paris (FR)
(72) Inventeur: Reich, Frederic, 91100 Villabe (FR); Couturier, Alban, 92320 Chatillon (FR); Dauchy, Philippe, 75014 Paris (FR); Reymond, Patricia, 91120 Palaiseau (FR); Bonnin, Bruno, 92160 Antony (FR); Conte, Alberto, 75014 Paris (FR); Guitton, Francois-Xavier, 44640 Saint Jean de Boiseau (FR); Massart, Pierre, 44000 Nantes (FR)
(74) Mandataire: Chaffraix, Sylvain

(57) **Abrégé**

L'invention concerne un procédé de sélection de formats de codage de données multimédia dans un système de communication comprenant au moins deux terminaux (Ti) aptes à échanger des données multimédia. Chaque terminal dispose d'un ensemble de formats de codage (Ei) regroupant les formats qu'il est capable de traiter en réception et ceux qu'il est capable d'appliquer aux données multimédia en émission. Avant tout échange de données entre deux terminaux, chaque terminal communique son ensemble de formats de codage à l'autre terminal via un serveur (S). Selon l'invention, le serveur est connecté à des moyens de conversion de format de codage (C1,C2) et il complète, si nécessaire, chaque ensemble de formats de codage reçu d'un terminal en fonction des moyens de conversion à sa disposition avant de les communiquer à l'autre terminal. De cette façon, on enrichit virtuellement les capacités de codage et de décodage des terminaux du système, ce qui permet de diminuer le taux d'échec des communications.

## Description

L'invention concerne un procédé de sélection de formats de codage de données multimédia dans un système de communication comprenant au moins deux terminaux aptes à échanger des données multimédia entre eux.

Cette sélection est généralement effectuée préalablement à un échange de données multimédia entre deux terminaux du système de communication. Par données multimédia, on comprend tout type de donnée numérisée telle que de la voix (téléphonie), du texte ou de la vidéo (images).

La présente invention sera plus particulièrement décrite dans le cadre de systèmes de communication comportant des terminaux fonctionnant selon le protocole SIP (pour Session Initiation protocol en terminologie anglo-saxonne) ou le protocole H323 sans qu'on puisse y voir une quelconque limitation de la portée de l'invention à ce type de système de communication.

Actuellement, avant tout échange de données multimédia entre deux terminaux du système de communication, lesdits terminaux sélectionnent un format de codage à employer pour que toute donnée multimédia codée transmise par l'un ou l'autre des terminaux puisse être décodée par le terminal recevant ladite donnée multimédia. En effet, tous les terminaux du système de communication ne disposent pas forcément des mêmes moyens de codage et/ou décodage des données multimédia.

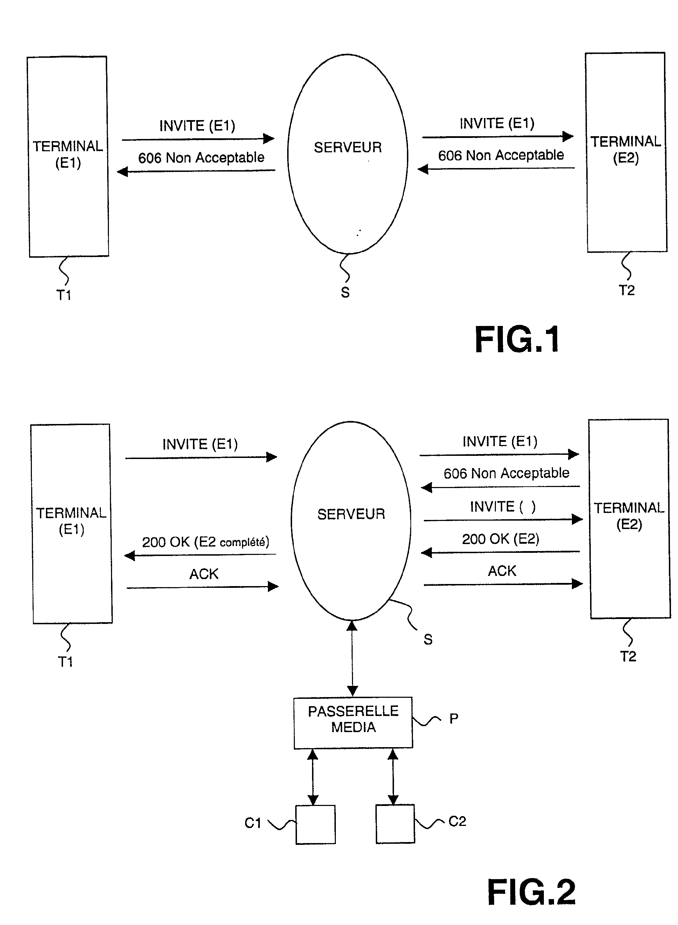

La figure 1 illustre la sélection d'un format de codage de données multimédia dans un système de communication comportant deux terminaux T1 et T2 fonctionnant selon le protocole SIP. Dans cette figure, les deux terminaux T1 et T2 cherchent à échanger des données multimédia. Avant tout envoi de données multimédia de T1 vers T2, il est nécessaire que le terminal T1 sélectionne, pour cet envoi, un format de codage qu'il pourra appliquer aux données multimédia à émettre et que le terminal T2 pourra traiter en réception. De même, pour l'envoi de données multimédia de T2 vers T1, le terminal T2 doit sélectionner un format de codage qu'il pourra appliquer aux données multimédia à émettre et que le terminal T1 pourra traiter en réception.

Pour cela, le terminal T1 communique au terminal T2, via un serveur mandataire S (proxy server dans la terminologie anglo-saxonne), un ensemble de formats de codage regroupant les formats de codage qu'il est capable d'appliquer aux données multimédia en émission et ceux qu'il est capable de traiter en réception. Cet ensemble est ci-après appelé E1. L'ensemble correspondant associé au terminal T2 est noté E2. Dans la suite de la description, les termes format de codage d'émission et format de codage de réception d'un terminal donné désignent respectivement un format de codage que ce terminal est capable d'appliquer aux données qu'il émet et un format de codage qu'il est capable de décoder en réception.

Cette étape de communication de l'ensemble E1 au serveur S puis au terminal T2 est représentée dans la figure 1 par deux flèches reliant respectivement le terminal T1 au serveur S et le serveur S au terminal T2, au-dessus desquelles est apposée l'instruction INVITE (E1).

Si le terminal T2 est capable de décoder au moins un format de codage d'émission de l'ensemble E1 (cas où au moins un des formats de codage de réception de l'ensemble E2 correspond à au moins un des formats de codage d'émission de l'ensemble E1), la transmission de données multimédia du terminal T1 vers le terminal T2 pourra avoir lieu et le format de codage qui sera retenu par le terminal T1 pour coder les données à transmettre de T1 vers T2 sera l'un de ceux que le terminal T2 est capable de décoder.

Par contre, si le terminal T2 ne peut décoder aucun des formats de codage d'émission de l'ensemble E1 (aucun des formats de codage de réception de l'ensemble E2 ne correspond à un format de codage d'émission de l'ensemble E1), la transmission de données de T1 vers T2 est impossible. Ce cas est illustré à la figure 1. Le terminal T2 en avertit alors le terminal T1 via le serveur mandataire S. Cette étape est représentée dans la figure 1 par deux flèches reliant le terminal T2 au serveur S et le serveur S au terminal T1, au-dessus desquelles est apposée l'instruction 606 Non Acceptable.

Ces situations de blocage sont fréquentes lorsque le système de communication met en relation des terminaux ayant des capacités et des fonctions différentes.

Un but de l'invention est de réduire au maximum ces situations de blocage.

Une solution immédiate consisterait à augmenter les capacités de codage et de décodage de chacun des terminaux du système de communication. Une autre solution consisterait à uniformiser les capacités de codage et de décodage des terminaux du système de communication, c'est-à-dire à prévoir un système dans lequel tous les terminaux auraient des moyens de codage et de décodage identiques. Ces deux solutions représentent un coût financier élevé puisqu'elles nécessitent soit de nombreux moyens de codage et de décodage pour chaque terminal du système, soit une mise à jour régulière des moyens de codage et décodage de tous les terminaux pour qu'ils disposent tous sensiblement des mêmes formats de codage et décodage et, de préférence, des formats les plus récents.

L'idée sous-jacente à l'invention est d'enrichir virtuellement l'ensemble des formats de codage de chaque terminal du système lorsqu'il est transmis vers un autre terminal.

Pour cela, on prévoit de connecter des moyens de conversion de formats de codage au serveur S et de compléter, à l'aide du serveur, les ensembles de formats de codage transmis.

Aussi, l'invention a pour objet un procédé de sélection de formats de codage de données multimédia dans un système de communication comportant au moins deux terminaux aptes à échanger des données multimédia entre eux, chaque terminal disposant d'un ensemble de formats de codage regroupant ceux qu'il est capable de traiter en réception et ceux qu'il est capable d'appliquer aux données multimédia en émission,
caractérisé en ce que, avant tout échange de données multimédia entre deux terminaux du système de communication, il comporte les étapes suivantes :
- au moins l'un des deux terminaux communique son ensemble de formats de codage à un serveur du système de communication en relation avec des moyens de conversion du format de codage des données multimédia destinées à être échangées,
- le serveur complète, si nécessaire pour l'échange de données multimédia, le ou chaque ensemble de formats de codage reçu d'un desdits deux terminaux en fonction des moyens de conversion à sa disposition et le communique à l'autre desdits deux terminaux, et
- chaque terminal recevant un ensemble complété de l'autre desdits deux terminaux sélectionne un format de codage de réception parmi ceux qu'il est capable de traiter en réception et que l'autre desdits deux terminaux est capable d'appliquer en émission selon son ensemble complété et/ou un format de codage d'émission parmi ceux qu'il est capable d'appliquer en émission et que l'autre desdits deux terminaux est capable de traiter en réception selon son ensemble complété.
   On augmente ainsi, de manière virtuelle, les capacités de codage des terminaux du système.
   L'invention concerne également un système de communication comportant
- au moins deux terminaux aptes à échanger des données multimédia entre eux, chaque terminal disposant d'un ensemble de formats de codage regroupant ceux qu'il est capable de traiter en réception et ceux qu'il est capable d'appliquer aux données multimédia en émission,
- un serveur pour transmettre, avant tout échange de données multimédia entre deux terminaux du système de communication, l'ensemble de formats de codage d'au moins l'un desdits deux terminaux vers l'autre,
caractérisé en ce que le serveur est connecté à des moyens de conversion du format de codage des données multimédia destinées à être échangées,
et en ce que le serveur complète, si nécessaire pour l'échange de données multimédia, le ou chaque ensemble de formats de codage reçus de l'un desdits deux terminaux en fonction des moyens de conversion à sa disposition avant de le communiquer à l'autre desdits deux terminaux.

Selon une caractéristique importante de l'invention, chaque terminal du système comporte en outre des moyens pour sélectionner un format de codage de réception parmi ceux qu'il est capable de traiter en réception et que l'autre desdits deux terminaux est capable d'appliquer en émission selon son ensemble complété et/ou un format de codage d'émission parmi ceux qu'il est capable d'appliquer en émission et que l'autre desdits deux terminaux est capable de traiter en réception selon son ensemble complété.

D'autres caractéristiques et avantages de l'invention apparaîtront à la lecture de la description qui est donnée ci-après à titre d'exemple non limitatif en référence aux dessins annexés, parmi lesquels :
- la figure 1, déjà décrite, illustre la sélection d'un format de codage dans un système de communication de l'art antérieur ;
- la figure 2 illustre la sélection d'un format de codage conforme à l'invention dans un système de communication comprenant deux terminaux SIP ; et
- la figure 3 illustre la sélection d'un format de codage conforme à l'invention dans un système de communication comprenant deux terminaux H323.

Selon l'invention, on prévoit d'enrichir, si possible et si nécessaire, chaque ensemble de formats de codage reçu par le serveur S avant de le retransmettre vers l'un des terminaux du système. Pour cela, le serveur S est connecté à des moyens destinés à convertir, le cas échéant, le format de codage des données multimédia échangées entre les terminaux du système.

Ainsi, selon l'invention, lorsque le serveur S reçoit un ensemble de formats de codage, il le complète, si nécessaire pour l'échange de données et si possible, en fonction des moyens de conversion à sa disposition.

Le procédé de l'invention est illustré par la figure 2 qui se rapporte, comme la figure 1, à un système de communication comprenant deux terminaux SIP, T1 et T2, et un serveur mandataire S. Les 3 étapes de la figure 1 représentées par les instructions INVITE(E1), INVITE(E1) et 606 Non Acceptable sont reprises dans la figure 2. A ce stade, le serveur S sait que le terminal T2 n'est pas en mesure de décoder des données multimédia codées provenant du terminal T1. Le serveur S invite alors le terminal T2 à lui communiquer son ensemble de formats de codage, E2. Cette étape est représentée sur la figure par l'instruction INVITE(). En réponse, le terminal T2 communique son ensemble E2 au serveur S (instruction 200 OK (E2)).

Le serveur S complète ensuite l'ensemble E2 reçu en fonction des moyens de conversion à sa disposition. Dans la figure 2, le serveur S est en relation avec des moyens de conversion de format de codage C1, C2 via une passerelle média P.

L'étape visant à compléter les ensembles de format de codage reçus par le serveur S peut être illustrée à travers un exemple très simple. Par exemple, si l'ensemble E2 reçu par le serveur S comprend le format de codage A et que les moyens de conversion permettent de convertir le format de codage A en un format de codage B, l'ensemble E2 complété sera composé des formats de codage A et B.

Le serveur S communique ensuite l'ensemble E2 complété au terminal T1 (instruction 200 OK (E2 complété)).

Le terminal T1 sélectionne alors un format de codage d'émission qui appartient à la fois aux formats de codage d'émission de l'ensemble E1 et aux formats de codage de réception de l'ensemble E2. Il sélectionne également un format de codage de réception qui appartient à la fois aux formats de codage de réception de l'ensemble E1 et aux formats de codage d'émission de l'ensemble E2.

Le terminal T1 communique ensuite au serveur S les formats de codage d'émission et de réception qu'il a retenus (instruction ACK). Le serveur S modifie ces formats de codage pour qu'ils correspondent respectivement à un format de codage de réception et un format de codage d'émission de l'ensemble E2, puis les transmet ainsi modifiés au terminal T2. Lors de cette étape, le serveur S réserve auprès de la passerelle média P les moyens nécessaires à la conversion des formats de codage retenus par le terminal T1.

La transmission de données multimédia entre les terminaux T1 et T2 peut ensuite avoir lieu selon les formats de codage sélectionnés. Ces données multimédia transitent par la passerelle média P qui convertit, au moyen des circuits de conversion réservés par le serveur S, le format de codage des données multimédia si nécessaire.

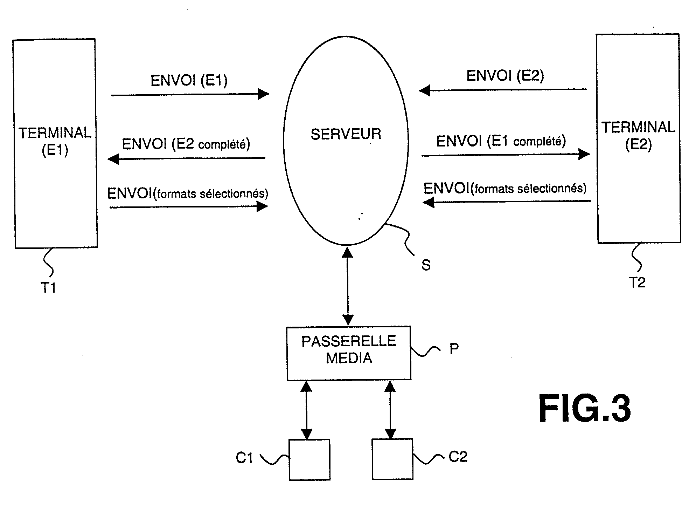

La figure 3 illustre la sélection de format de codage dans un système de communication comportant des terminaux fonctionnant selon le protocole H323. Comme dans la figure 2, le système comprend deux terminaux, T1 et T2, un serveur S qui est ici un serveur contrôleur d'accès, et des moyens de conversion de format de codage C1 et C2 connectés au serveur S par l'intermédiaire d'une passerelle média P. Avant tout échange de données multimédia entre les terminaux T1 et T2, ces derniers communiquent tous les deux leurs ensembles de formats de codage, respectivement E1 et E2, au serveur S.

Selon l'invention, si aucun des formats de codage d'émission ou de réception de l'ensemble E1 ne correspond respectivement à des formats de codage de réception ou d'émission de l'ensemble E2, le serveur S complète lesdits ensembles, en fonction des moyens de conversion à sa disposition, pour qu'une transmission de données multimédia entre les terminaux T1 et T2 soit possible.

Le serveur S communique ensuite l'ensemble E1 complété au terminal T2 et l'ensemble E2 complété au terminal T1. Chacun des terminaux T1 et T2 sélectionne alors un format de codage d'émission et de réception comme dans le système de la figure 2. Chaque terminal communique ensuite au serveur S les formats de codage qu'il a retenus pour que le serveur réserve auprès de la passerelle média les moyens de conversion nécessaires pour passer des formats de codage retenus par le terminal T1 à ceux retenus par le terminal T2.

## Revendications

1. Procédé de sélection de formats de codage de données multimédia dans un système de communication comportant au moins deux terminaux (Ti) aptes à échanger des données multimédia entre eux, chaque terminal (Ti) disposant d'un ensemble de formats de codage (Ei) regroupant ceux qu'il est capable de traiter en réception et ceux qu'il est capable d'appliquer aux données multimédia en émission,
**caractérisé en ce que**, avant tout échange de données multimédia entre deux terminaux du système de communication, il comporte les étapes suivantes :
- au moins l'un des deux terminaux communique son ensemble de formats de codage à un serveur (S) du système de communication en relation avec des moyens de conversion (C1,C2) du format de codage des données multimédia destinées à être échangées,
- le serveur (S) complète, si nécessaire pour l'échange de données multimédia, le ou chaque ensemble de formats de codage reçu d'un desdits deux terminaux en fonction des moyens de conversion à sa disposition et le communique à l'autre desdits deux terminaux, et
- chaque terminal recevant un ensemble complété de l'autre desdits deux terminaux sélectionne un format de codage de réception parmi ceux qu'il est capable de traiter en réception et que l'autre desdits deux terminaux est capable d'appliquer en émission selon son ensemble complété et/ou un format de codage d'émission parmi ceux qu'il est capable d'appliquer en émission et que l'autre desdits deux terminaux est capable de traiter en réception selon son ensemble complété.

2. Procédé de sélection selon la revendication 1, **caractérisé en ce que** lesdits terminaux (Ti) fonctionnent selon le protocole SIP et **en ce que** le serveur (S) est un serveur mandataire.

3. Procédé de sélection selon la revendication 1, **caractérisé en ce que** lesdits terminaux (Ti) fonctionnent selon le protocole H323 et **en ce que** le serveur (S) est un contrôleur d'accès.

4. Système de communication comportant
- au moins deux terminaux (Ti) aptes à échanger des données multimédia entre eux, chaque terminal (Ti) disposant d'un ensemble de formats de codage (Ei) regroupant ceux qu'il est capable de traiter en réception et ceux qu'il est capable d'appliquer aux données multimédia en émission,
- un serveur (S) pour transmettre, avant tout échange de données multimédia entre deux terminaux du système de communication, l'ensemble de formats de codage d'au moins l'un desdits deux terminaux vers l'autre,
**caractérisé en ce que** le serveur (S) est connecté à des moyens de conversion (C1,C2) du format de codage des données multimédia destinées à être échangées,
et **en ce que** le serveur (S) complète, si nécessaire pour l'échange de données multimédia, le ou chaque ensemble de formats de codage reçus de l'un desdits deux terminaux (Ti) en fonction des moyens de conversion (C1,C2) à sa disposition avant de le communiquer à l'autre desdits deux terminaux.

5. Système de communication selon la revendication 4, **caractérisé en ce que** chaque terminal (Ti) comporte en outre des moyens pour sélectionner un format de codage de réception parmi ceux qu'il est capable de traiter en réception et que l'autre desdits deux terminaux est capable d'appliquer en émission selon son ensemble complété et/ou un format de codage d'émission parmi ceux qu'il est capable d'appliquer en émission et que l'autre desdits deux terminaux est capable de traiter en réception selon son ensemble complété.

6. Système de communication selon la revendication 4 ou 5, **caractérisé en ce que** le serveur (S) est connecté aux moyens de conversion (C1,C2) par l'intermédiaire d'une passerelle média (P).

7. Système de communication selon l'une des revendications précédentes, **caractérisé en ce que** lesdits terminaux (Ti) fonctionnent selon le protocole SIP et **en ce que** le serveur (S) est un serveur mandataire.

8. Système de communication selon l'une des revendications 4 à 6, **caractérisé en ce que** lesdits terminaux (Ti) fonctionnent selon le protocole H323 et **en ce que** le serveur (S) est un contrôleur d'accès.
